Europäisches Patentamt

(19) European Patent Office

Office européen des brevets

(11) Numéro de publication : **0 329 580 B1**

(12) # FASCICULE DE BREVET EUROPEEN

(45) Date de publication du fascicule du brevet :
27.12.91 Bulletin 91/52

(51) Int. Cl.⁵ : **A47J 17/02, B26B 1/08**

(21) Numéro de dépôt : **89420055.9**

(22) Date de dépôt : **16.02.89**

(54) **Eplucheur à légumes ou à fruits.**

(30) Priorité : **19.02.88 FR 8802504**

(43) Date de publication de la demande :
**23.08.89 Bulletin 89/34**

(45) Mention de la délivrance du brevet :
**27.12.91 Bulletin 91/52**

(84) Etats contractants désignés :
**AT BE CH DE ES FR GB GR IT LI LU NL SE**

(56) Documents cités :
**DE-A- 2 509 034
DE-C- 25 457
DE-C- 638 091
US-A- 4 592 140
US-A- 4 713 885**

(73) Titulaire : **Baudouin, Jacques
Les Tourelles
F-07100 Roiffieux (FR)**

(72) Inventeur : **Baudouin, Jacques
Les Tourelles
F-07100 Roiffieux (FR)**

(74) Mandataire : **Bratel, Gérard et al
Cabinet GERMAIN & MAUREAU 20C, Bd
Eugène Deruelle
F-69003 Lyon (FR)**

## Description

La présente invention, se rapportant au domaine des ustensiles ménagers, concerne un éplucheur à légumes ou à fruits utilisable plus particulièrement, mais non exclusivement, pour l'épluchage des asperges.

Les éplucheurs actuellement en usage sont généralement composés d'un manche, d'une lame coupante et d'une ou deux barres parallèles à la lame, que l'on peut appeler barres d'appui ou de guidage étant donné qu'elles sont destinées à prendre appui sur le légume ou le fruit, pour guider convenablement l'ustensile tout en limitant l'épaisseur des épluchures.

Dans sa forme la plus classique, un éplucheur à légumes ou à fruits se présente comme une sorte de couteau, dont le manche est solidaire d'une lame monobloc, large et de profil incurvé, divisée par deux fentes longitudinales en trois parties parallèles, la partie centrale constituant une lame coupante, avec deux bords coupants, tandis que les deux parties latérales forment les barres d'appui.

L'inconvénient majeur de ces ustensiles réside dans le fait que les épluchures restent souvent coincées dans la ou les fentes, situées entre la lame, d'une part, et la ou les barres d'appui, d'autre part. Cet inconvénient se manifeste, surtout, dans le cas d'épluchures ayant des formes irrégulières ou une consistance fibreuse ; ainsi on le rencontre notamment lors de l'épluchage des asperges. Les épluchures coincées sur l'ustensile doivent être enlevées avec la main qui ne tient pas l'ustensile, ce qui gêne et ralentit l'opération d'épluchage.

Le document DE-A-2509034 décrit un éplucheur à légumes ou à fruits, qui comprend un manche, une lame coupante solidaire au manche, et un organe en forme de rouleau parallèle à la lame, et rétractable à l'intérieur du manche. L'organe en forme de rouleau sert de barre d'appui et de guidage ; de plus, cet organe rotatif et mobile en translation dans sa direction axiale est utilisable pour éliminer les épluchures. Enfin, l'escamotage de l'organe en forme de rouleau à l'intérieur du manche est obtenu par un montage pivotant dudit organe autour d'un axe transversal.

Ainsi, la réalisation selon le document DE-A-2509034 est relativement compliquée dans sa structure, et son utilisation pour la libération des épluchures est peu pratique puisqu'elle nécessite la combinaison d'un mouvement de rotation et d'un mouvement de translation de l'organe en forme de rouleau, à effectuer tout en tenant le manche de l'éplucheur.

La présente invention fournit un perfectionnement aux éplucheurs à légumes ou à fruits qui tout en conservant une structure simple permet à l'utilisateur, en cas de coincement des épluchures, d'enlever facilement les épluchures coincées, en se servant uniquement de sa main tenant l'ustensile.

A cet effet, l'invention a pour objet un éplucheur à légumes ou à fruits, composé d'un manche, d'une lame coupante et d'une ou deux barres d'appui ou de guidage parallèles à la lame, la lame et/ou au moins une barre d'appui ou de guidage formant un ensemble mobile en translation suivant la direction du manche et rétractable à l'intérieur de ce manche, l'éplucheur étant caractérisé en ce que l'escamotage de l'ensemble mobile à l'intérieur du manche est en translation suivant la direction du manche de telle sorte qu'il libère les épluchures coincées entre la lame, d'une part, et la ou les barres d'appui ou de guidage, d'autre part.

Ainsi, le principe de l'invention repose uniquement sur un mouvement de translation, et l'utilisateur de l'ustensile peut, par un geste simple et rapide, et aussi souvent que cela est nécessaire en cours d'épluchage, commander l'escamotage dans le manche de la lame coupante et/ou de l'une ou des deux barres d'appui, de sorte que les épluchures coincées ne sont plus retenues et tombent d'elles-mêmes, par leur propre poids. L'ensemble mobile est ensuite ramené — ou revient de lui-même par l'effet d'un ressort ou d'un autre moyen élastique de rappel — dans sa position normale d'utilisation, c'est-à-dire en position entièrement sortie du manche, et l'opération d'épluchage peut reprendre aussitôt.

Plus particulièrement, dans le cas d'un éplucheur à légumes ou à fruits comprenant de façon connue une lame coupante encadrée par deux barres d'appui ou de guidage, l'invention prévoit trois formes de réalisation :

— Dans la première, l'ensemble mobile rétractable à l'intérieur du manche est formé par la lame coupante et par les deux barres d'appui ou de guidage.

— Dans la seconde forme de réalisation, cet ensemble mobile comprend la lame coupante et une seule des deux barres d'appui ou de guidage, tandis que l'autre barre d'appui reste solidaire du manche.

— Dans la troisième forme de réalisation, ledit ensemble mobile comprend les deux barres d'appui ou de guidage, tandis que la lame coupante reste solidaire du manche.

Dans le cas d'un éplucheur muni d'une barre d'appui ou de guidage unique, les trois modes d'exécution suivants sont envisageables :

— Dans le premier, l'ensemble mobile rétractable à l'intérieur du manche est formé par la lame coupante et par l'unique barre d'appui ou de guidage.

— Dans le deuxième mode d'exécution, ledit ensemble mobile est constitué par la lame coupante seule, l'unique barre d'appui restant solidaire du manche.

— Dans le troisième mode, cet ensemble mobile comprend l'unique barre d'appui seulement, la lame coupante restant solidaire du manche.

Avantageusement, dans les cas où il subsiste une barre d'appui solidaire du manche de l'éplucheur, celle-ci porte, à son extrémité éloignée du manche, une butée rigide s'étendant perpendiculairement à cette barre d'appui "fixe" et comportant des moyens pour le positionnement de la lame coupante et de l'éventuelle barre d'appui de l'ensemble mobile, lorsque cet ensemble mobile occupe sa position entièrement sortie du manche. Cette disposition assure, dans la position normale d'utilisation de l'éplucheur, une rigidité suffisante de l'ensemble formé par la lame coupante et par la ou les barres d'appui, rigidité qui est nécessaire pour obtenir des épluchures d'épaisseur constante, alors que la ou les barres d'appui et surtout la lame coupante, étant minces et assez flexibles, risquent de se déformer lorsqu'on les appuie sur un légume ou un fruit pour l'éplucher.

Dans l'une ou l'autre des formes de réalisations précédentes, l'ensemble mobile rétractable à l'intérieur du manche, et formé par la lame coupante et/ou par au moins une barre d'appui ou de guidage, peut comporter un butoir prévu pour l'actionnement manuel de cet ensemble mobile, dans le sens de son escamotage à l'intérieur du manche, tandis qu'un ressort est monté à l'intérieur du manche pour rappeler ledit ensemble mobile dans sa position entièrement sortie du manche. Le coulissement de l'ensemble mobile, dans le sens de l'escamotage, est ainsi commandé en poussant le butoir de cet ensemble avec le pouce ou l'index de la main qui tient l'ustensile, cette main continuant de maintenir le manche avec les autres doigts, sans avoir à modifier la position de sa prise, pendant que s'effectue le déplacement de l'ensemble mobile. Après libération des épluchures, il suffit de relâcher la pression exercée par un doigt sur le butoir, pour que l'ensemble mobile revienne dans sa position normale d'utilisation, sous l'effet du ressort de rappel logé dans le manche. Cette utilisation de l'instrument peut être faite aussi bien par un droitier que par un gaucher, dans le cas d'un ensemble mobile formé par la lame coupante et par l'une des deux barres d'appui.

Lorsque l'utilisateur déplace l'ensemble mobile formé par la lame coupante et/ou par l'une des barres d'appui ou de guidage, en actionnant le poussoir avec l'un des doigts de sa main, les autres doigts qui maintiennent l'ustensile risquent de glisser sur le manche en sens inverse, par effet de réaction. Afin de maintenir en place ces autres doigts sans effort, on prévoit avantageusement sur le manche, du côté opposé à celui du butoir solidaire de l'ensemble mobile, un autre butoir fixe pour la retenue des doigts autres que celui agissant sur le premier butoir. Ainsi, lorsque le mouvement de translation de l'ensemble mobile est commandé à l'aide de l'index, c'est le pouce de la même main, ayant tendance à se déplacer en sens inverse, qui sera retenu à sa bonne place par le second butoir, solidaire du manche.

Dans une autre forme de réalisation de l'invention, l'ensemble mobile rétractable à l'intérieur du manche, et formé par la lame coupante et/ou par au moins une barre d'appui ou de guidage, comporte une liaison mécanique avec un levier monté pivotant sur le manche, de telle sorte qu'une poussée exercée sur le levier, dans un sens le rapprochant ou l'écartant du manche, déplace l'ensemble mobile vers sa position normale d'utilisation, entièrement sortie du manche, ou vers sa position escamotée à l'intérieur du manche.

Selon une première possibilité, l'ensemble mobile est relié à un point fixe du manche par une genouillère, formée de deux biellettes réunies l'une à l'autre par une articulation intermédiaire prenant appui sur le levier précité, de telle sorte qu'une pression exercée sur ce levier dans le sens de son rapprochement du manche provoque la sortie de l'ensemble mobile hors du manche, vers sa position normale d'utilisation, tandis qu'un ressort est monté à l'intérieur du manche pour agir sur l'ensemble mobile dans le sens de son escamotage à l'intérieur du manche. Une pression exercée à l'aide d'un doigt sur le levier permet ici à l'utilisateur de déplacer l'ensemble mobile vers sa position d'utilisation, par l'intermédiaire de la genouillère, à l'encontre de l'action du ressort. De préférence, pour éviter à l'utilisateur d'exercer une pression permanente sur le levier pendant l'épluchage, il est prévu sur le manche un petit cliquet retenant le levier lorsque ce dernier est ramené contre le manche. Lorsque l'utilisateur désire éliminer les épluchures, il efface le cliquet ce qui libère le levier et permet au ressort d'escamoter l'ensemble mobile, la genouillère étant alors déplacée de manière à écarter le levier du manche. Avantageusement, une petite roue est prévue à l'articulation intermédiaire de la genouillère, pour faciliter le glissement de cette dernière sur le levier lors du déplacement de l'ensemble mobile.

Dans une variante, la liaison mécanique de l'ensemble mobile avec le levier est réalisée au moyen d'un fil qui est attaché à l'une de ses extrémités sur l'ensemble mobile, qui passe sur une première poulie fixe située vers l'extrémité postérieure du manche, puis sur une seconde poulie mobile, portée par le levier, et qui est attaché par son autre extrémité sur le manche, en un point tel que, lorsque le levier est écarté du manche, le fil glissant ou roulant sur les poulies entraîne l'ensemble mobile vers l'intérieur du manche, tandis qu'un ressort est monté à l'intérieur du manche pour rappeler l'ensemble mobile dans sa position entièrement sortie du manche. L'escamotage de l'ensemble mobile à l'intérieur du manche est ainsi obtenu en exerçant une traction sur cet ensemble par l'intermédiaire d'un fil, choisi suffisamment solide et souple.

De toute façon, l'invention sera mieux comprise à l'aide de la description qui suit, en référence au dessin schématique annexé représentant, à titre d'exemples non limitatifs, quelques formes d'exécution de cet éplucheur à légumes ou à fruits :

Figure 1 est une vue en perspective d'un éplucheur conforme à la présente invention, dans une première forme de réalisation ;

Figure 2 est une vue en coupe très schématique, montrant le mécanisme de l'éplucheur de figure 1 ;

Figures 3 et 4 sont des vues illustrant l'utilisation de l'éplucheur des figures 1 et 2 par un droitier ;

Figure 5 est une vue illustrant l'utilisation du même éplucheur par un gaucher ;

Figure 6 est une vue similaire à figure 2, relative à une deuxième forme de réalisation de l'invention ;

Figure 7 est une vue similaire aux précédentes, illustrant une variante de l'éplucheur selon la figure 6 ;

Figure 8 est une vue en perspective d'une dernière forme de réalisation de cet éplucheur ;

Figure 9 est une vue en coupe longitudinale de l'éplucheur de figure 8.

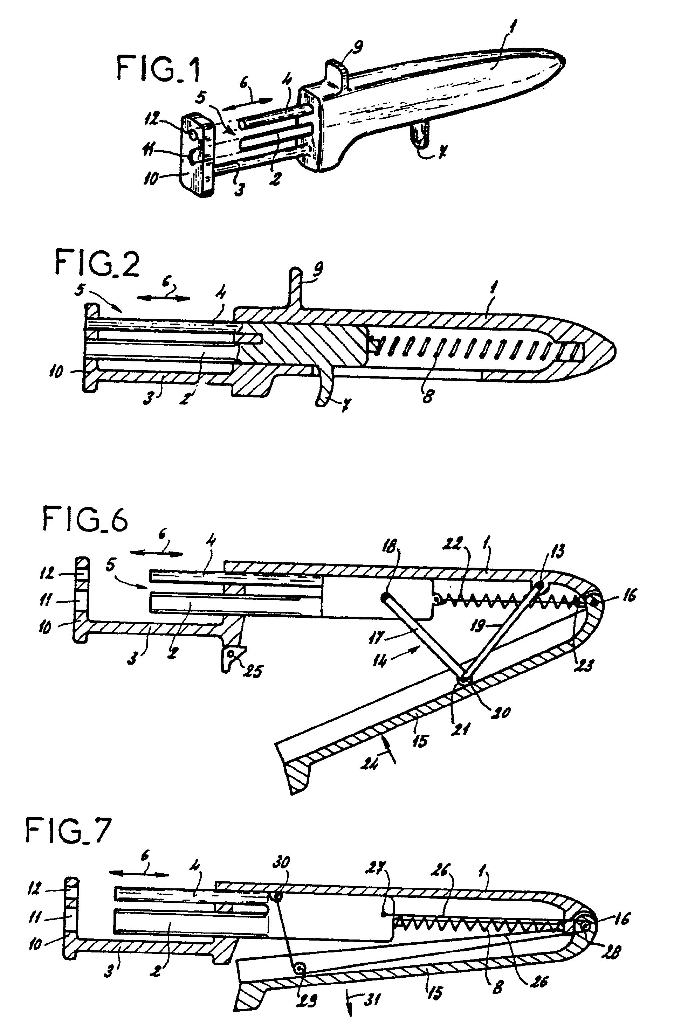

Dans toutes les formes de réalisation représentées au dessin, l'éplucheur à légumes ou à fruits comprend un manche 1, une lame coupante 2 et, de part et d'autre de la lame 2, deux barres d'appui respectivement 3 et 4, parallèles entre elles et à la lame 2. En se limitant d'abord aux figures 1 à 7, l'une des barres d'appui 3 est fixée rigidement sur le manche 1, et l'autre barre d'appui 4 forme, avec la lame 2, un ensemble mobile rétractable 5, déplaçable en translation dans la direction longitudinale du manche 1, comme indiqué par une flèche double 6, et escamotable à l'intérieur de ce manche 1, lequel est évidé de manière à pouvoir recevoir et à guider l'ensemble mobile 5.

Dans la forme de réalisation représentée aux figures 1 et 2, l'ensemble mobile 5, formé par la lame 2 et par la barre d'appui 4, comporte encore dans sa partie postérieure un butoir latéral 7 pour son actionnement manuel, à l'aide du pouce ou de l'index de la main qui tient l'ustensile. L'ensemble mobile 5 peut ainsi être tiré en arrière et escamoté, à l'encontre de l'action d'un ressort de rappel 8 logé dans le manche 1, qui ramène l'ensemble mobile 5 vers sa position normale d'utilisation, entièrement sortie du manche 1. Un autre butoir 9 est porté par le manche 1, du côté opposé au premier butoir 7, pour retenir les doigts autres que celui agissant sur ce premier butoir 7, et éviter ainsi tout glissement de la main.

Comme le montre notamment la figure 1, la barre d'appui fixe 3 porte, à son extrémité éloignée du manche 1, une butée rigide 10 qui s'étend perpendiculairement à cette barre d'appui fixe 3. Dans la butée 10 sont ménagées deux ouvertures ou rainures 11 et 12, prévues pour recevoir respectivement les extrémités libres de la lame 2 et de la barre d'appui 4 appartenant à l'ensemble mobile 5, lorsque ce dernier occupe sa position entièrement sortie du manche 1. Ainsi l'on évite, dans la position normale d'utilisation de l'éplucheur, les flexions indésirables de la lame coupante 2 et de la barre d'appui 4, et l'ensemble de l'ustensile s'en trouve rigidifié.

En cours d'utilisation de l'ustensile, lorsque des épluchures se trouvent coincées entre la lame 2, d'une part, et l'une ou l'autre des deux barres d'appui 3 et 4, d'autre part, il suffit d'escamoter l'ensemble mobile 5 dans le manche 1, en agissant sur le butoir 7, pour libérer les épluchures qui s'éliminent alors par simple effet de gravité, en étant arrêtées par la paroi "fixe" située à l'extrémité du manche 1 et traversée par l'ensemble mobile 5. Ensuite, en relâchant le butoir 7, on permet au ressort de rappel 8 de ramener l'ensemble mobile 5 dans sa position d'utilisation, pour continuer l'opération d'épluchage en cours.

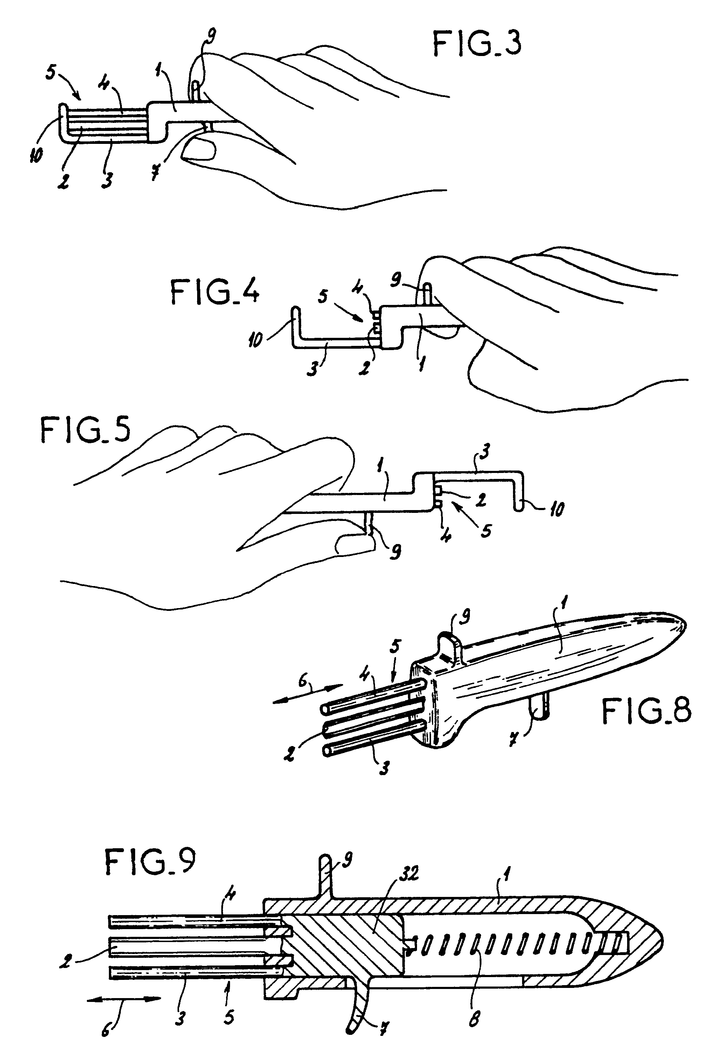

Les figures 3 et 4 illustrent l'utilisation par un droitier de l'éplucheur précédemment décrit, en montrant successivement la position normale d'utilisation et la position escamotée d'élimination des épluchures. La figure 5 illustre la tenue du même éplucheur par un gaucher.

La figure 6 montre une autre forme de réalisation, comprenant encore un ensemble mobile 5 rétractable à l'intérieur du manche 1, et formé par la lame coupante 2 et par l'une 4 des deux barres d'appui 3 et 4. La partie postérieure de l'ensemble mobile 5 est ici reliée à un point fixe 13 du manche 1, situé dans la région médiane de ce dernier, par une genouillère 14 qui coopère avec un levier 15 articulé sur le manche 1 en un point 16, situé à l'extrémité postérieure de ce manche 1.

Plus particulièrement, la genouillère 14 comprend une première biellette 17 articulée en un point 18 sur l'ensemble mobile 5, et une seconde biellette 19 articulée au point 13 sur le manche 1, les deux biellettes 17 et 19 étant réunies l'une à l'autre par une articulation intermédiaire 20. Une petite roue 21, prévue à l'articulation intermédiaire 20, prend appui sur une face du levier 15, en roulant sur cette face.

Un ressort 22, tendu entre l'extrémité postérieure de l'ensemble mobile 5 et un point fixe 23 du manche 1, agit sur l'ensemble mobile 5 dans le sens de son escamotage à l'intérieur du manche 1. A l'inverse, une poussée exercée sur le levier 15 selon une flèche 24, donc tendant à rapprocher le levier 15 du manche 1, provoque par l'intermédiaire de la genouillère 14 un déplacement de l'ensemble mobile 5 vers sa position entièrement sortie du manche 1. Un petit cliquet 25 est prévu pour la retenue du levier 15 dans sa position la plus rapprochée du manche 1, correspondant à la position occupée par l'ensemble mobile 5 dans l'utilisation normale de l'éplucheur.

Lorsqu'on désire éliminer les épluchures coincées, on doit ici libérer le levier 15 par effacement du cliquet 25. Par l'effet du ressort 22, l'ensemble mobile 5 est alors escamoté à l'intérieur du manche. Simultanément, la genouillère 14 écarte le levier 15 du manche 1. Ensuite, une simple poussée exercée sur le levier 15, selon la flèche 24, ramène ce dernier contre le manche 1 et remet l'ensemble mobile 5 en position d'utilisation.

Dans une variante, illustrée par la figure 7, l'ensemble mobile 5 est relié mécaniquement au levier 15, toujours articulé en 16 à l'extrémité postérieure du manche 1, par un fil 26 solide et souple qui suit un trajet en ligne brisée. Une première extrémité du fil 26 est attachée, en un point 27, sur la partie postérieure de l'ensemble mobile 5. A partir du point d'attache 27, le fil 26 s'étend d'abord parallèlement au manche 1, et il passe sur une première poulie fixe 28 située à l'extrémité postérieure du manche 1, au niveau de l'articulation 16 du levier 15. Ensuite, le fil 26 suit la direction du levier 15, et il passe sur une seconde poulie mobile 29, portée par le levier 15. L'autre extrémité du fil 26 est attachée sur le manche 1, en un point fixe 30 situé dans la partie antérieure de ce manche 1.

Un ressort de rappel 8, logé à l'intérieur du manche 1, agit ici sur l'ensemble mobile 5 comme dans la première forme de réalisation décrite, c'est-à-dire qu'il tend à repousser cet ensemble mobile 5 vers sa position normale d'utilisation, entièrement sortie du manche 1. A cette position de l'ensemble mobile 5 il correspond, par l'effet de la liaison réalisée au moyen du fil 26, une position du levier 15 rapprochée du manche 1. Comme dans la précédente forme de réalisation, le levier 15 peut être retenu dans cette position au moyen d'un petit cliquet 25.

Pour éliminer les épluchures coincées, en cas de besoin, l'utilisateur libère le levier 15, et il exerce sur ce levier 15, une traction selon la flèche 31, en écartant le levier 15 du manche 1. En glissant ou roulant sur les deux poulies 28 et 29, le fil 26 tire alors l'ensemble mobile 5 à l'intérieur du manche 1, provoquant ainsi l'escamotage de cet ensemble mobile 5. Dès que le levier 15 est relâché, le ressort de rappel 8 peut ramener l'ensemble mobile 5 en position sortie, le levier 15 étant, quant à lui, ramené contre le manche 1.

Les figures 8 et 9 montrent encore une autre forme de réalisation dans laquelle la lame coupante 2 et les deux barres d'appui 3 et 4, encadrant cette lame 2, sont toutes les trois mobiles et rétractables simultanément à l'intérieur du manche 1. L'ensemble mobile 5 est ainsi composé de la lame 2 et des deux barres 3 et 4, réunies entre elles par un corps 32 monté coulissant dans la partie creuse du manche 1 qui loge aussi le ressort de rappel 8. Comme dans la première forme de réalisation, l'ensemble mobile 5 comporte encore ici une butoir 7 qui permet de le tirer en arrière, à l'encontre de l'action du ressort 8, pour libérer les épluchures.

Comme il va de soi, l'invention ne se limite pas aux seules formes d'exécution de cet éplucheur à légumes ou à fruits qui ont été décrites ci-dessus, à titre d'exemples ; elle en embrasse, au contraire, toutes les variantes de réalisation et d'application respectant le même principe défini par les revendications annexées. C'est ainsi, notamment, que l'éplucheur objet de l'invention peut aussi se concevoir avec une lame coupante et une seule barre d'appui ; dans ce cas la barre d'appui unique peut être soit solidaire du manche, de sorte que l'ensemble mobile est limité à la lame, soit solidaire de la lame de manière à constituer avec cette dernière l'ensemble mobile. On peut aussi envisager des dispositions inverses et équivalentes, c'est-à-dire où la lame coupante reste solidaire du manche et où ce sont les deux barres d'appui, ou l'unique barre d'appui selon le cas, qui constitue(nt) l'ensemble mobile.

**Revendications**

1. Eplucheur à légumes ou à fruits, composé d'un manche (1), d'une lame coupante (2) et d'une ou deux barres d'appui ou de guidage (3, 4) parallèles à la lame (2), la lame (2) et/ou au moins une barre d'appui ou de guidage (4) formant un ensemble (5) mobile en translation suivant la direction du manche (1) et rétractable à l'intérieur de ce manche, caractérisé en ce que l'escamotage de l'ensemble mobile (5) à l'intérieur du manche (1) est en translation suivant la direction du manche de telle sorte qu'il libère les épluchures coincées entre la lame (2), d'une part, et la ou les barre d'appui ou de guidage (3, 4), d'autre part.

2. Eplucheur à légumes ou à fruits selon la revendication 1, comprenant une lame coupante (2) encadrée par deux barres d'appui ou de guidage (3, 4), caractérisé en ce que l'ensemble mobile (5), rétractable à l'intérieur du manche (1), est formé par la lame coupante (2) et les deux barres d'appui ou de guidage (3, 4).

3. Eplucheur à légumes ou à fruits selon la revendication 1, comprenant une lame coupante (2) encadrée par deux barres d'appui ou de guidage (3, 4) caractérisé en ce que l'ensemble mobile (5), rétractable à l'intérieur du manche (1), est formé par la lame coupante (2) et par l'une des deux barres d'appui ou de guidage (4), tandis que l'autre barre d'appui (3) reste solidaire du manche (1).

4. Eplucheur à légumes ou à fruits selon la revendication 1, comprenant une lame coupante (2) encadrée par deux barres d'appui ou de guidage (3, 4), caractérisé en ce que l'ensemble mobile (5), rétractable à l'intérieur du manche (1), comprend les deux barres d'appui ou de guidage, tandis que la lame coupante reste solidaire du manche (1).

5. Eplucheur à légumes ou à fruits selon la revendication 1, muni d'une barre d'appui ou de guidage unique, caractérisé en ce que l'ensemble mobile (5), rétractable à l'intérieur du manche (1), est formé par la lame coupante et par l'unique lame d'appui ou de guidage.

6. Eplucheur à légumes ou à fruits selon la revendication 1, muni d'une barre d'appui ou de guidage unique, caractérisé en ce que l'ensemble mobile (5), rétractable à l'intérieur du manche (1), est constitué par la lame coupante seule, l'unique barre d'appui ou de guidage restant solidaire du manche (1).

7. Eplucheur à légumes ou à fruits selon la revendication 1, muni d'une barre d'appui ou de guidage unique, caractérisé en ce que l'ensemble mobile (5), rétractable à l'intérieur du manche (1), comprend l'unique barre d'appui ou de guidage seulement, la lame coupante restant solidaire du manche (1).

8. Eplucheur à légumes ou à fruits selon la revendication 3 ou 6, caractérisé en ce que la barre d'appui ou de guidage (3) restant solidaire du manche (1) porte, à son extrémité éloignée du manche (1), une butée rigide (10) s'étendant perpendiculairement à cette barre d'appui "fixe" (3) et comportant des moyens (11, 12) pour le positionnement de la lame coupante (2) et de l'éventuelle barre d'appui (4) de l'ensemble mobile (5), lorsque cet ensemble mobile (5) occupe sa position entièrement sortie du manche (1).

9. Eplucheur à légumes ou à fruits selon l'ensemble des revendications 3 et 8, caractérisé en ce que les moyens de positionnement précités, prévus sur la butée (10) portée par la barre d'appui "fixe" (3), sont constitués par des ouvertures ou des rainures (11, 12) ménagées dans cette butée (10), et prévues pour recevoir les extrémités libres de la lame coupante (2) et de la barre d'appui (4) appartenant à l'ensemble mobile (5), lorsque ce dernier occupe sa position entièrement sortie du manche (1).

10. Eplucheur à légumes ou à fruits selon l'une quelconque des revendications 1 à 9, caractérisé en ce que l'ensemble mobile (5), rétractable à l'intérieur du manche (1) et formé par la lame coupante (2) et/ou par au moins une barre d'appui ou de guidage (4), comporte un butoir (7) prévu pour l'actionnement manuel de cet ensemble mobile (5), dans le sens de son escamotage à l'intérieur du manche (1), tandis qu'un ressort (8) est monté à l'intérieur du manche (1) pour rappeler ledit ensemble mobile (5) dans sa position entièrement sortie du manche (1).

11. Eplucheur à légumes ou à fruits selon la revendication 10, caractérisé en ce qu'il est prévu sur le manche (1), du côté opposé à celui du butoir (7) solidaire de l'ensemble mobile (5), un autre butoir fixe (9), pour la retenue des doigts autres que celui agissant sur le premier butoir (7).

12. Eplucheur à légumes ou à fruits selon l'une quelconque des revendications 1 à 9, caractérisé en ce que l'ensemble mobile (5) rétractable à l'intérieur du manche (1), et formé par la lame coupante (2) et/ou par au moins une barre d'appui ou de guidage (4), comporte une liaison mécanique (14, 26) avec un levier (15) monté pivotant (en 16) sur le manche (1), de telle sorte qu'une poussée (24, 31) exercée sur levier (15), dans un sens le rapprochant ou l'écartant du manche (1), déplace l'ensemble mobile (5) vers sa position normale d'utilisation, entièrement sortie du manche (1), ou vers sa position escamotée à l'intérieur du manche (1).

13. Eplucheur à légumes ou à fruits selon la revendication 12, caractérisé en ce que l'ensemble mobile (5) est relié à un point fixe (13) du manche (1) par une genouillère (14), formée de deux biellettes (17, 19) réunies l'une à l'autre par une articulation intermédiaire (20) prenant appui sur le levier précité (15), de telle sorte qu'une pression (24) exercée sur ce levier (15) dans le sens de son rapprochement du manche (1) provoque la sortie de l'ensemble mobile (5) hors du manche (1), vers sa position normale d'utilisation, tandis qu'un ressort (22) est monté à l'intérieur du manche (1) pour agir sur l'ensemble mobile (5) dans le sens de son escamotage à l'intérieur du manche (1).

14. Eplucheur à légumes ou à fruits selon la revendication 13, caractérisé en ce qu'il est prévu, sur le manche (1), un petit cliquet (25) retenant le levier (15) lorsque ce dernier est ramené contre le manche (1).

15. Eplucheur à légumes ou à fruits selon la revendication 13 ou 14, caractérisé en ce qu'une petite roue (21) est prévue à l'articulation intermédiaire (20) de la genouillère (14), pour faciliter le glissement de cette dernière sur le levier (15) lors du déplacement de l'ensemble mobile (5).

16. Eplucheur à légumes ou à fruits selon la revendication 12, caractérisé en ce que la liaison mécanique de l'ensemble mobile (5) avec le levier (15) est réalisée au moyen d'un fil (26) qui est attaché à l'une de ses extrémités (en 27) sur l'ensemble mobile (5), qui passe sur une première poulie fixe (28) située vers l'extrémité postérieure du manche (1), puis sur une seconde poulie mobile (29), portée par le levier (15), et qui est attaché par son autre extrémité sur le manche (1), en un point (30) tel que, lorsque le levier (15) est écarté du manche (1), le fil (26) glissant ou roulant sur les poulies (28, 29) entraîne l'ensemble mobile (5) vers l'intérieur du manche (1), tandis qu'un ressort (8) est monté à l'intérieur du manche (1) pour rappeler l'ensemble mobile (5) dans sa position entièrement sortie du manche (1).

**Patentansprüche**

1. Schälgerät für Gemüse oder Früchte, bestehend aus einem Handgriff (1), einer Schneidklinge (2) und ein oder zwei zu der Klinge (2) parallelen Stütz- oder Führungsstangen (3, 4), wobei die Klinge (2) und/oder mindestens eine Stütz- oder Führungsstange (4) eine entsprechend der Richtung des Handgriffes (1) translatorisch bewegbare Baugruppe (5) bilden, die in das Innere des Handgriffes zurückziehbar ist, **dadurch gekennzeichnet**, daß das Einziehen der beweglichen Baugruppe (5) in das Innere des Handgriffes (1) translatorisch folgend der Richtung des Handgriffes (1) derart ist, daß es die zwischen der Klinge (2) einerseits und der oder den Stützoder Führungsstangen (3, 4) andererseits eingeklemmten Abfälle freisetzt.

2. Schälgerät für Gemüse oder Früchte nach Anspruch 1, beinhaltend eine Schneidklinge (2), die von zwei Stützoder Führungsstangen (3, 4) umrahmt ist, dadurch gekennzeichnet, daß die in das Innere des Handgriffes (1) zurückziehbare bewegliche Baugruppe (5) von der Schneidklinge (2) und den beiden Abstütz- und Führungsstangen (3, 4) gebildet ist.

3. Schälgerät für Gemüse oder Früchte nach Anspruch 1, beinhaltend eine Schneidklinge (2), die von zwei Stütz- oder Führungsstangen (3, 4) umrahmt ist, dadurch gekennzeichnet, daß die in das Innere des Handgriffes (1) zurückziehbare bewegliche Baugruppe (5) von der Schneidklinge (2) und einer der beiden Stütz- oder Führungsstangen (4) gebildet ist, während die andere Stützstange (3) fest mit dem Handgriff (1) verbunden bleibt.

4. Schälgerät für Gemüse oder Früchte nach Anspruch 1, beinhaltend eine Schneidklinge (2), die von zwei Abstütz- oder Führungsstangen (3, 4) umrahmt ist, dadurch gekennzeichnet, daß die in das Innere des Handgriffes (1) zurückziehbare bewegliche Baugruppe (5) die beiden Stütz- oder Führungsstangen beinhaltet, während die Schneidlinge ortsfest mit dem Handgriff (1) verbunden bleibt.

5. Schälgerät für Gemüse oder Früchte nach Anspruch 1, versehen mit einer einzigen Abstütz- oder Führungsstange, dadurch gekennzeichnet, daß die in das Innere des Handgriffes (1) zurückziehbare bewegliche Baugruppe (5) durch die Schneidklinge und durch die einzige Stütz- oder Führungsstange gebildet ist.

6. Schälgerät für Gemüse oder Früchte nach Anspruch 1, versehen mit einer einzigen Stütz- oder Führungsstange, dadurch gekennzeichnet, daß die in das Innere des Handgriffes (1) zurückziehbare bewegliche Baugruppe (5) allein durch die Schneidklinge gebildet ist, wobei die einzige Stütz- oder Führungsstange ortsfest mit dem Handgriff (1) verbunden bleibt.

7. Schälgerät für Gemüse oder Früchte nach Anspruch 1, versehen mit einer einzigen Stütz- und Führungsstange, dadurch gekennzeichnet, daß die in das Innere des Handgriffes (1) zurückziehbare bewegliche Baugruppe (5) allein die einzige Stütz- und Führungsstange beinhaltet, wobei die Schneidklinge ortsfest mit dem Handgriff (1) verbunden bleibt.

8. Schälgerät für Gemüse oder Früchte nach Anspruch 3 oder 6, dadurch gekennzeichnet, daß die mit dem Handgriff (1) fest verbunden bleibende Stütz- oder Führungsstange (3) an ihrem vom Handgriff (1) entfernt liegenden Ende einen starren Anschlag (10) aufweist, der sich senkrecht zu dieser feststehenden Stützstange (3) erstreckt und Mittel (11, 12) zur Positionierung der Schneidklinge (2) und gegebenenfalls weiteren Stützstange (4) der beweglichen Baugruppe (5) aufweist, wenn die bewegliche Baugruppe (5) ihre vollständig aus dem Handgriff (4) herausgetretene Lage einnimmt.

9. Schälgerät für Gemüse oder Früchte nach der Gesamtheit der Ansprüche 3 und 8, dadurch gekennzeichnet, daß die genannten Führungsmittel, die auf dem von der festen Anschlagstange (3) getragenen Anschlag (10) vorgesehen sind, durch Öffnungen oder Nuten (11, 12) gebildet sind, die in diesem Anschlag (10) vorgesehen sind und die vorgesehen sind, um die freien Enden der zu der beweglichen Baugruppe (5) gehörenden Schneidklinge (2) und der Stützstange (4) aufzunehmen, wenn die Baugruppe ihre vollständig aus dem Handghriff (1) herausgetretene Lage einnimmt.

10. Schälgerät für Gemüse oder Früchte nach einem der Ansprüche 1 bis 9, dadurch gekennzeichnet, daß die in das Innere des Handgriffes (1) zurückziehbare bewegliche Baugruppe (5), gebildet durch die Schneidklinge (2) und/oder durch mindestens 5 eine Stütz- oder Führungsstange (4), eine Nase (7) für die Handbetätigung dieser beweglichen Baugruppe (5) im Sinne des Einziehens in das Innere des Handgriffes (1) aufweist, während im Inneren des Handgriffes (1) eine Feder (8) montiert ist, um die genannte bewegliche Baugruppe (5) in die vollständig aus dem Handgriff (1) herausgetretene Lage zurückzuführen.

11. Schälgerät für Gemüse oder Früchte nach Anspruch 10, dadurch gekennzeichnet, daß auf dem Handgriff (1) auf der der mit der beweglichen Baugruppe (5) fest verbundenen Nase (7) gegenüberliegenden Seite eine weitere feststehende Nase (9) zum Halt für andere Finger als den auf die erste Nase (7) einwirkenden vorgesehen ist.

12. Schälgerät für Gemüse oder Früchte nach einem der Ansprüche 1 bis 9, dadurch gekennzeichnet, daß die in das Innere des Handgriffes (1) zurückziehbare bewegliche Baugruppe (5), gebildet durch die Schneidklinge (2) und/oder durch mindestens eine Stütz- oder Führungsstange (4), eine mechanische Verbindung (14, 26) mit einem Hebel (15) aufweist, der schwenkbar (in 16) auf dem Handgriff (1) montiert ist, derart, daß ein auf den Hebel (5) ausgeübter Druck (24, 31) im Sinne seiner Annäherung oder seiner Entfernung vom Handgriff (1) die bewegliche Baugruppe (5) zu ihrer normalen Benutzungslage, vollständig aus dem Handgriff (1) herausgetreten, oder zu ihrer in das Innere des Handgriffes (1) eingezogenen Lage verlagert.

13. Schälgerät für Gemüse oder Früchte nach Anspruch 12, dadurch gekennzeichnet, daß die bewegliche Baugruppe (5) mit einem Festpunkt (13) des Handgriffes (1) durch ein Kniegelenk (14), gebildet aus zwei Schwingarmen (17, 19) verbunden ist, die miteinander durch ein Zwischengelenk (20) verbunden sind, das sich auf dem genannten Hebel (15) abstützt derart, daß ein auf diesen Hebel (15) ausgeübter Druck im Sinne seiner Annäherung an den Handgriff (1) das Heraustreten der beweglichen Baugruppe (5) aus dem Handgriff (1) hin zu seiner normalen Benutzungslage hervorruft, während im Inneren des Handgriffes (1) eine Feder (22) montiert ist, um auf die bewegliche Baugruppe (5) im Sinne ihrer Einziehung in das Innere des Handgriffes (1) einzuwirken.

14. Schälgerät für Gemüse oder Früchte nach Anspruch 13, dadurch gekennzeichnet, daß auf dem Handgriff (1) eine kleine Sperrklinke (15) angeordnet ist, die den Hebel (15) zurückhält, wenn Letzterer an den Handgriff (1) herangeführt ist.

15. Schälgerät für Gemüse oder Früchte nach Anspruch 13 oder 14, dadurch gekennzeichnet, daß an dem Zwischengelenk (20) des Kniegelenkes (14) ein kleines Rad (21) vorgesehen ist, um dessen Gleiten auf dem Hebel (15) bei der Verlagerung der beweglichen Baugruppe (5) zu erleichtern.

16. Schälgerät für Gemüse oder Früchte nach Anspruch 12, dadurch gekennzeichnet, daß die mechanische Verbindung der beweglichen Baugruppe (5) mit dem Hebel (15) mittels eines Fadens (26) verwirklicht ist, der an einem seiner Enden (in 27) an der beweglichen Baugruppe (5) befestigt ist, der über eine erste ortsfeste Rolle (28) am rückwärtigen Ende des Handgriffes (1) läuft, dann über eine zweite bewegliche Rolle (29), die von dem Hebel (15) getragen ist, läuft und der mit seinem anderen Ende an dem Handgriff (an 1) an einem Punkt (30) befestigt ist derart, daß, wenn der Hebel (15) von dem Handgriff (1) entfernt wird, der über die Rollen (28, 29) gleitende oder rollende Faden (26) die bewegliche Baugruppe (5) zum Inneren des Handgriffes (1) bewegt, während eine Feder (8) im Inneren des Handgriffes (1) montiert ist, um die bewegliche Baugruppe (5) in ihrem vollständig aus dem Handgriff (1) ausgetretene Lage zurückzubewegen.

## Claims

1. A fruit or vegetable peeler, comprising a handle (1), a cutting blade (2) and one or two support or guide bars (3, 4) parallel to the blade (2), the blade (2) and/or at least one support or guide bar (4) forming an assembly (5) which is movable in translation in the direction of the handle (1) and retractable into this handle, characterised in that the retraction of the movable assembly (5) into the handle (1) is in translation in the direction of the handle, such that it frees the peelings trapped between the blade (2), on the one hand, and the support or guide bar or bars (3, 4), on the other hand.

2. A fruit or vegetable peeler according to Claim 1, including a cutting blade (2) flanked by two support or guide bars (3, 4), characterised in that the movable assembly (5), which is retractable within the handle (1), is formed by the cutting blade (2) and the two guide or support bars (3, 4).

3. A fruit or vegetable peeler according to Claim 1, including a cutting blade (2) flanked by two support or guide bars (3, 4), characterised in that the movable assembly (5), which is retractable within the handle (1), is formed by the cutting blade (2) and by one of the two support or guide bars (4), whilst the other support bar (3) remains rigid with the handle (1).

4. A fruit or vegetable peeler according to Claim 1, including a cutting blade (2) flanked by two support or guide bars (3, 4), characterised in that the movable assembly (5), which is retractable within the handle (1), includes the two support or guide bars, whilst the cutting blade remains rigid with the handle (1).

5. A fruit or vegetable peeler according to Claim 1, provided with a single support or guide bar, characterised in that the movable assembly (5), which is retractable within the handle (1), is formed by the cutting blade and by the single support or guide blade.

6. A fruit or vegetable peeler according to Claim 1, provided with a single support or guide bar, characterised in that the movable assembly (5), which is retractable within the handle (1), is constituted by the cutting blade alone, the single support or guide bar remaining rigid with the handle (1).

7. A fruit or vegetable peeler according to Claim 1, provided with a single support or guide bar, characterised in that the movable assembly (5), which is retractable within the handle (1), includes only the single support or guide bar, the cutting blade remaining rigid with the handle (1).

8. A fruit or vegetable peeler according to Claim 3 or 6, characterised in that the support or guide bar (3) remaining rigid with the handle (1) has, at its end remote from the handle (1), a rigid abutment (10) extending perpendicularly to this "fixed" support bar (3) and having means (11, 12) for positioning the cutting blade (2) and the possible support bar (4) of the movable assembly (5), when this movable assembly (5) occupies its position fully extended from the handle (1).

9. A fruit or vegetable peeler according to the combination of Claims 3 and 8, characterised in that the aforementioned positioning means provided on the abutment (10) carried by the "fixed" support bar (3), are constituted by openings or grooves (11, 12) formed in this abutment (10) and provided to receive the free ends of the cutting blade (2) and the support bar (4) belonging to the movable assembly (5), when this latter occupies its position fully extended from the handle (1).

10. A fruit or vegetable peeler according to any one of Claims 1 to 9, characterised in that the movable assembly (5), which is retractable within the handle (1) and formed by the cutting blade (2) and/or by at least one support or guide bar (4), has a catch 7 provided for the manual operation of this movable assembly (5) in the direction of its retraction within the handle (1), whilst a spring (8) is mounted within the handle (1) to return the movable assembly (5) to its position in which it is fully extended from the handle (1).

11. A fruit or vegetable peeler according to Claim 10, characterised in that there is provided on the handle (1), on the side opposite to that of the catch (7) rigid with the movable assembly (5), another fixed catch (9) for holding the fingers, other than the one acting on the first catch (7).

12. A fruit or vegetable peeler according to any one of Claims 1 to 9, characterised in that the movable assembly (5), which is retractable within the handle (1) and formed by the cutting blade (2) and/or by at least one support or guide bar (4), has a mechanical connection (14, 26) with a lever (15) pivotally mounted (at 16) on the handle (1), such that a thrust (24, 31) exerted on the lever (15) moving it in a direction towards or away from the handle (1), moves the movable assembly (5) towards its normal use position, fully extended from the handle (1), or towards its position in which it is retracted within the handle (1).

13. A fruit or vegetable peeler according to Claim 12, characterised in that the movable assembly (5) is connected to a fixed point (13) on the handle (1) by a toggle linkage (14) formed by two links (17, 19) connected together by an intermediate articulation (20) bearing on the aforementioned lever (15), such that a pressure (24) exerted on this lever (15) in the direction of its movement towards the handle (1) causes the movable assembly (5) to move out of the handle (12) towards its normal use position, whilst a spring (22) is mounted within the handle (1) to act on the movable assembly (5) in the direction of its retraction within the handle (1).

14. A fruit or vegetable peeler according to Claim 13, characterised in that there is provided on the handle (1) a small catch (25) retaining the lever (15) when the latter is brought back against the handle (1).

15. A fruit or vegetable peeler according to Claim 13 or 14, characterised in that a small wheel 21 is provided at the intermediate articulation (20) of the toggle linkage (14) to facilitate the sliding of this latter on the lever (15) during movement of the movable assembly (5).

16. A fruit or vegetable peeler according to Claim 12, characterised in that the mechanical connection of the movable assembly (5) with the lever (15) is effected by means of a wire (26) which is attached at one of its ends (at 27) to the movable assembly (5), which passes onto a first fixed pulley (28) located towards the rear end of the handle (1), then onto a second movable pulley (29) carried by the lever (15), and which is attached by its other end to the handle (1) at a point (30) such that, when the lever (15) is moved away from the handle (1), the wire (26) sliding or rolling over the pulleys (28, 29) drives the movable assembly (5) towards the interior of the handle (1), whilst a spring (8) is mounted within the handle (1) to return the movable assembly (5) to its position in which it is fully extended from the handle (1).

FIG.1

FIG.2

FIG.6

FIG.7

FIG.3

FIG.4

FIG.5

FIG.8

FIG.9